# EUROPÄISCHE PATENTSCHRIFT

(11) **EP 1 939 588 B1**
(45) Veröffentlichungstag und Bekanntmachung des Hinweises auf die Patenterteilung: **22.05.2013**
(21) Anmeldenummer: 07123932.1
(22) Anmeldetag: 21.12.2007
(51) Int. Cl.: G01C 15/00

(54) **Messgerät**
Measuring device
Appareil de mesure

(30) Priorität: 29.12.2006 DE 202006019739 U; 07.02.2007 DE 202007001753 U
(43) Veröffentlichungstag der Anmeldung: 02.07.2008
(73) Patentinhaber: Stabila Messgeräte Gustav Ullrich GmbH, 76855 Annweiler (DE)
(72) Erfinder: Kallabis, Gabriel, 76848 Spirkelbach (DE)
(74) Vertreter: Stoffregen, Hans-Herbert

(56) Entgegenhaltungen:
- WO-A2-2006/022896
- CH-A- 471 397
- DE-T2- 69 732 257
- US-A- 5 182 863
- US-A- 6 079 883

## Beschreibung

Die Erfindung bezieht sich auf ein Messgerät mit einem eine Strahlaustrittsöffnung aufweisenden Gehäuse, insbesondere Lasergerät mit einer elektrooptischen Einrichtung zur Erzeugung einer waagerecht und/oder lotrecht verlaufenden Lichtlinie, wobei das Gehäuse zumindest bereichsweise von einer Abdeckung umgeben ist.

Ein entsprechendes Messgerät in Form eines Baulasergerätes ist aus der EP-B-1 376 055 (DE-U-202 09 856) bekannt. Dabei ist das Lasergehäuse von einer rahmenartigen Aufnahme umgeben, zu der das Lasergerät verstellbar ist. Hierdurch ergibt sich der Vorteil, dass ein erhöhter Geräteschutz bei gleichzeitiger Möglichkeit gegeben ist, mit konstruktiv einfachen Maßnahmen das Gehäuse und somit die Laserebene im gewünschten Umfang zu verstellen. Die als Abdeckung zu bezeichnende Aufnahme läuft dabei zumindest bereichsweise beabstandet zu dem Gerätegehäuse.

Um einen selbstnivellierenden Baulaser nach der EP-B- 1 298 413 in Bezug auf eine Markierung auf einer Unterlage positionieren zu können, ist das Gehäuse von plattenförmigen Ständern umgeben, die gegenüberliegende Seitenflächen des Lasergehäuses außermittig durchsetzen. Unabhängig von der Position der Ständer ist die Strahlaustrittsöffnung stets unbedeckt.

Die CH-C-442 774 bezieht sich auf einen automatischen Baunivellierer, dessen Gehäuse Strahlaustrittsöffnungen aufweist, denen Spiegel zugeordnet sind, die im Bedarfsfall die Öffnungen verschließen, um diese zu schützen.

Zur Markierung von Positionen an einem Gebäude sieht die US-A-2003/0014872 einen Projektionsstrahl mit Optik vor, die in einem zusammenklappbaren Gehäuse angeordnet ist.

Aus der DE-T-697 32 257 ist eine Referenzlaserstrahlvorrichtung bekannt. Die Vorrichtung umfasst ein zylindrisches Gehäuse und ein zu diesem verschwenkbares quaderförmiges Gehäuse. In dem zylindrischen Gehäuse ist eine Lasereinrichtung angeordnet. Das quaderförmig Gehäuse ist zur Aufnahme von Batterien zum Betreiben der Lasereinrichtung bestimmt.

In der US-A-5,182,863 werden zwei zueinander verschwenkbare Messgeräte in Form eines Laserabstandsmessgerätes und eines Bandmaßes beschrieben, die jeweils ein quaderförmiges Gehäuse aufweisen.

Der vorliegenden Erfindung liegt die Aufgabe zu Grunde, ein Messgerät der eingangs genannten Art so weiterzubilden, dass ohne wesentliche Veränderung der Außenabmessungen des Gehäuses selbst ein sicherer Schutz für die Strahlaustrittsöffnung dann gegeben ist, wenn das Gerät nicht benutzt werden soll. Gegebenenfalls soll die Möglichkeit gegeben sein, das Gerät an einer vertikal oder in etwa vertikal verlaufende Begrenzung zu befestigen.

Zur Lösung der Aufgabe sieht die Erfindung im Wesentlichen vor, dass das Gehäuse eine Quaderform aufweist, dass die Abdeckung um eine das Gehäuse durchsetzende Achse schwenkbar ist und einen ersten Abschnitt aufweist, der in Abhängigkeit von der Schwenkstellung der Abdeckung die Strahlaustrittsöffnung abdeckt oder freigibt, wobei in Transportstellung des Messgarätes die Abdeckung an zumindest zwei aneinander grenzenden Außenflächen des Gehäuses flächig anliegt. Dabei weist die Abdeckung insbesondere im Längsschnitt eine L-förmige Geometrie mit Längs- und Querschenkel auf, wobei der Querschenkel der erste Abschnitt ist, der folglich die Lichtaustrittsöffnung abdeckt oder freigibt. Alternativ besteht die Möglichkeit, dass die Abdeckung eine U-förmige Geometrie mit Quer- und Seitenschenkeln aufweist, wobei die Seitenschenkel in ihren Endbereichen schwenkbar mit dem Gehäuse verbunden sind und der Querschenkel der erste Abschnitt ist.

Erfindungsgemäß wird eine Abdeckung vorgeschlagen, die unmittelbar von dem Gehäuse ausgeht und derart zu diesem ausrichtbar ist, dass bei nicht benutztem Messgerät, also insbesondere in Transportstellung, ein flächiges Anliegen der Abdeckung an zumindest zwei aneinandergrenzenden Außenflächen erfolgt, wobei gleichzeitig die Strahlaustrittsöffnung abgedeckt ist.

Die Abdeckung ist folglich derart der Außengeometrie des Gehäuses angepasst, dass sie wie verschwenkbare Wandungen bzw. Abschnitte von Wandungen des Gehäuses wirkt.

Bei einer eine L-Form aufweisenden Geometrie der Abdeckung ist vorgesehen, dass querschenkelfernliegender Endbereich des Längsschenkels schwenkbar mit dem Gehäuse verbunden ist. Dabei kann der Längsschenkel selbst Aufnahmen wie Durchbrechungen als Montagefixiermittel aufweisen. Somit kann das Messgerät bei verschwenkter Abdeckung z. B. an einer Wand aufgehängt werden, um. lot- bzw. waagerechte Lichtlinien oder -punkte zu projizieren, sofern es sich um ein Lasergerät handelt.

Bei U-förmiger Geometrie der Abdeckung ist insbesondere vorgesehen, dass die Schwenkachse mittig zwei gegenüberliegende Seitenflächen, insbesondere Boden- und Kopffläche des Gehäuses durchsetzt und dass der Querschenkel der Abdeckung auf gegenüberliegende Flächen, insbesondere Stirnflächen des Gehäuses ausrichtbar ist, um diese wahlweise abzudecken. Ferner kann der Querschenkel Montagefixiermittel aufweisen, um über diese das Gerät zu befestigen wie an einer Wand aufzuhängen.

Losgelöst hiervon sollte die Abdeckung derart ausgebildet sein, das diese bei die Strahlaustrittsöffnung abdeckender Position mit dem Gehäuse verrastbar ist. Somit kann ein unkontrolliertes Verschwenken der Abdeckung nicht erfolgen.

Insbesondere ist in einer Querseitenfläche des quaderförmigen Gehäuses, insbesondere der Stirnfläche die Strahlaustrittsöffnung vorgesehen.

Um mit konstruktiv einfachen Maßnahmen ein Verschwenken der Abdeckung zu ermöglichen, sieht eine Weiterbildung der Erfindung vor, dass die Achse quer, insbesondere senkrecht zu einer zu erzeugenden waagerechten Lichtlinie verläuft, wobei in dem Gehäuse ein Hülsenkörper oder zwei fluchtend zueinander angeordnete Hülsenkörper vorgesehen sein können, um die die Abdeckung drehbar ist.

Die Abdeckung besteht insbesondere aus schlagfestem Kunststoff, so dass das Gehäuse aus preiswertem Material hergestellt sein kann. Hierzu ist ggfs. vorgesehen, dass die Abdeckung in der die Lichtaustrittsöffnung abdeckenden Position abschnittsweise über dem Gehäuse vorsteht, so dass bei Stoßeinwirkung wie z. B. beim Herabfallen ein Auftreffen auf die Abdeckung zuerst erfolgt.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:
- Fig. 1: eine perspektivische Darstellung einer ersten Ausführungsform einer Abdeckung eines Messgerätes,
- Fig. 2: das Messgerät gemäß Fig. 1 mit teilweise geöffneter Abdeckung,
- Fig. 3: das Messgerät gemäß Fig. 1 mit teilweise geöffneter Abdeckung in einer von der Fig. 2 abweichenden Darstellung,
- Fig. 4: das Messgerät gemäß Fig. 1 mit weiter geöffneter Abdeckung,
- Fig. 5: eine zweite Ausführungsform einer Abdeckung eines Messgerätes in geschlossener Stellung,
- Fig. 6: das Messgerät gemäß Fig. 5 in einer ersten Position der Abdeckung,
- Fig. 7: das Messgerät gemäß Fig. 5 in einer zweiten Position der Abdeckung und
- Fig. 8: eine weitere Ausführungsform einer Abdeckung eines Messgerätes.

Die erfindungsgemäße Lehre wird nachstehend anhand eines Lasergerätes erläutert, ohne dass hierdurch eine Einschränkung der erfindungsgemäßen Lehre erfolgt. Diese bezieht sich vielmehr ganz allgemein auf Messgeräte mit Gehäusen, die eine Strahlaustrittsöffnung aufweisen, die im gewünschten Umfang von einer Abdeckung verschließbar oder freigebbar ist, um einen Schutz zu bieten.

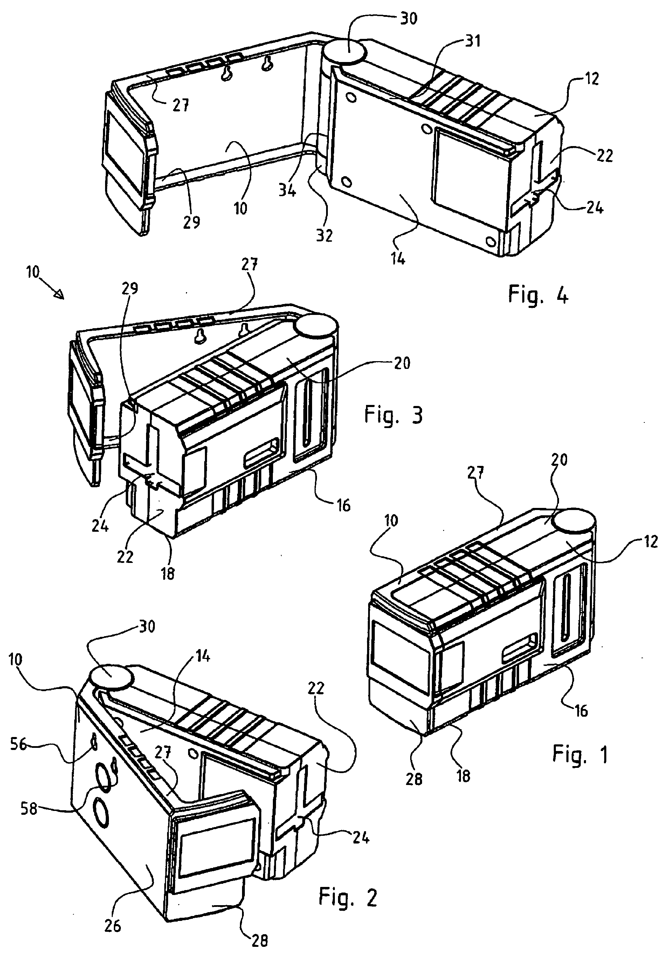

In den Fig. 1 bis 4 ist eine erste Ausführungsform einer Abdeckung 10 dargestellt, die verschwenkbar an einem Gehäuse 12 eines Lasergerätes angelenkt ist. Das Gehäuse 12 weist eine Quadergeometrie auf, ohne dass hierdurch eine Beschränkung erfolgen soll.

Das Gehäuse 12 umfasst Längsseitenflächen 14 und 16, Bodenfläche 18, Kopffläche 20 und Stirnflächen 22, von denen eine dargestellt ist und eine Strahlaustrittsöffnung 24 aufweist. In der Bodenfläche 18 der Längsseitenfläche 14 und der Kopffläche 20 können weitere Strahlaustrittsöffnungen vorgesehen sein.

In dem Gehäuse 12 ist bevorzugterweise eine schwerkraftbedingt selbsttätig ausrichtbare elektrooptische Einrichtung angeordnet, über die ein lotrechter bzw. waagerechter Lichtstrahl erzeugbar ist, um eine lotrechte bzw. waagerechte Lichtlinie abbilden zu können.

Die Abdeckung 10 weist eine L-Geometrie mit Längsschenkel 26 und Querschenkel 28 auf. Die Abdeckung 10 ist im Bereich der zu der Lichtaustrittsöffnung 24 gegenüberliegenden Stirnwandung schwenkbar gelagert. Hierzu durchsetzt eine Schwenkachse die Boden- und Kopfwandung und damit Boden- und Kopffläche 18, 20. Um die Abdeckung 10 anzulenken, weist diese im Endbereich ihres Längsschenkels 26 hülsenförmige Aufnahmen 30, 32 auf, die auf zapfenförmige und von dem Gehäuse 12 ausgehende Abschnitte eines zylindrischen Körpers 34 aufsetzbar sind. Somit kann die Abdeckung 10 problemlos verschwenkt werden.

Wie sich insbesondere aus einem Vergleich der Fig. 1 mit den Fig. 2 bis 4 ergibt, ist die Abdeckung 10 geometrisch an den Verlauf der Stirnfläche 22 sowie der Längsseitenfläche 14 derart angepasst, dass bei abgedeckter Strahlaustrittsöffnung 24, also quasi verschlossenem Gehäuse 12, die Abdeckung 10 auf der Seitenfläche 14 sowie der Stirnfläche 22 aufliegt und fluchtend in die angrenzenden Wandungen, also Kopf- und Bodenfläche 18, 20 sowie vordere Seitenfläche 16 übergeht. Des Weiteren ist die Abdeckung 10 in der die Strahlaustrittsöffnung 22 verschließenden Position (Fig. 1) mit dem Gehäuse 12 verrastbar.

Aus den zeichnerischen Darstellungen der Fig. 1, 2 und 4 ergibt sich des Weiteren, dass zumindest der Längsschenkel 26 der Abdeckung 10 abgewinkelte Längsränder 27, 29 aufweist, die bei die Lichtaustrittsöffnung 24 abdeckender Stellung in Stufen 31 eingreifen bzw. zu liegen kommen, die in zwischen der Rückseitenfläche 14 und der Kopf- bzw. Fußbodenfläche 18, 20 verlaufen. Hierdurch ergibt sich ein bündiger Übergang zwischen der Abdeckung 10 und der angrenzenden Kopf- und Bodenfläche 18, 20 des Gehäuses 12. Die Längsräder 27, 29 und somit auch die Stufen 31 können partiell vergrößert sein, um z. B. Strahlaustrittsöffnungen in Boden- und/oder Kopffläche zu verschließen.

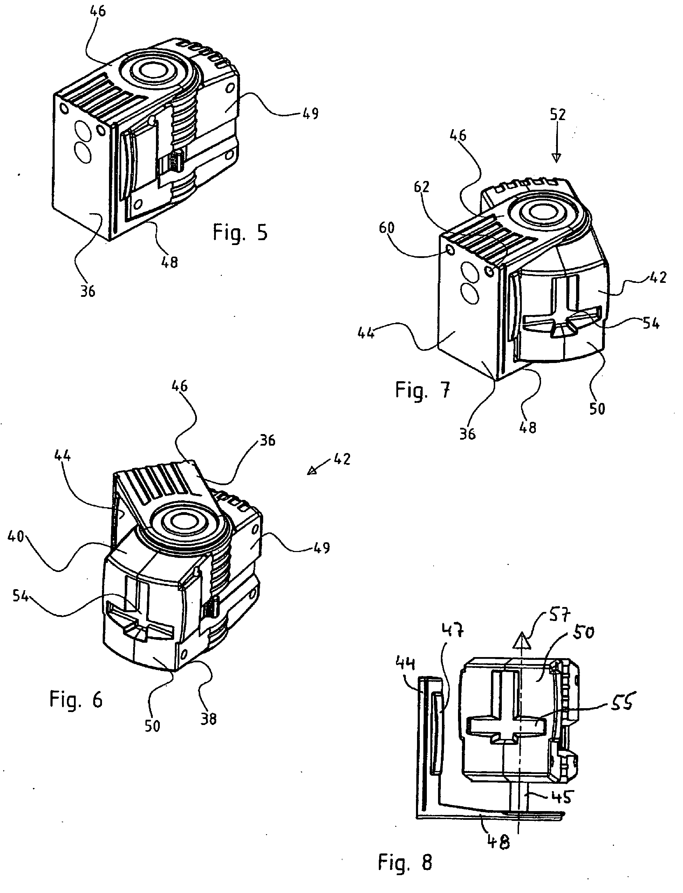

Verläuft die Schwenkachse der Abdeckung 10 außermittig im Gehäuse 12, und zwar im Randbereich des Gehäuses 12 entlang der Stirnfläche, die der Strahlaustrittsöffnung 24 gegenüberliegt, so sieht das den Fig. 5 bis 7 zu entnehmende Ausführungsbeispiel eine Abdeckung 36 vor, deren Schwenkachse die Boden- und Kopffläche 38, 40 eines Gehäuses 42 mittig durchsetzt. Die Abdeckung 36 weist dabei eine U-Geometrie mit Querschenkel 44 und Seitenschenkeln 46, 48 auf, die eine Längenerstreckung derart aufweisen, dass der Querschenkel 44 wahlweise eine der Stirnflächen 50, 52 des Gehäuses 42 abdeckt. Dabei weist im Ausführungsbeispiel die sichtbare Stirnfläche 50 eine Strahlaustrittsöffnung 54 auf.

Entsprechend dem Ausführungsbeispiel der Fig. 1 bis 4 durchsetzt folglich die Schwenkachse der Abdeckung 36 die Boden- und Kopfwandung 38, 40 und damit Boden- und Kopffläche, und zwar bei ordnungsgemäß ausgerichtetem Gehäuse 42, senkrecht zur erzeugten waagerechten Lichtlinie des Lasers.

Wie bei dem Ausführungsbeispiel der Fig. 1 bis 4 ist die Abdeckung 36 derart geometrisch ausgelegt, das bei Verschließen der Stirnflächen 50, 52 die Abdeckung 36 fluchtend in die angrenzenden Flächen übergeht, also in die Seitenflächen 49. Die Seitenschenkel 46, 48, die verschwenkbar mit dem Gehäuse 42 verbunden sind, weisen in ihren Endbereichen die Funktion von Lageraugen bildenden kreisförmigen Aufnahmen für entsprechende scheibenförmige Abschnitte des Gehäuses 42 auf, um ein sicheres Drehen zu ermöglichen.

Aus den zeichnerischen Darstellungen, insbesondere der Fig. 2 und 5, ergibt sich des Weiteren, dass die Abdeckung 10, 36 Durchbrechungen aufweist, von denen einige beispielhaft mit den Bezugszeichen 56, 58, 60, 62 gekennzeichnet sind, um z. B. eine Befestigung an einer vertikalen Begrenzungsfläche wie Wand zu ermöglichen. Somit bietet sich ein Montagefixiermittel. Desgleichen können auch Magnete in die Abdeckung eingesetzt werden bzw. in diese eingesetzt sein.

Im unteren Seitenschenkel 48 können Anschlussgewinde zur Befestigung des Geräts z. B. an Fotostativen vorgesehen sein.

Eine Weiterbildung sieht nach der Fig. 8 vor, dass die Abdeckung 36 eine L-förmige Geometrie aufweist. Diese wird durch die Schenkel 46, 48 gemäß der Fig. 5 - 7 gebildet. Somit erstreckt sich der eine Schenkel 48 entlang der Bodenfläche 38 des Gehäuses 42 und der andere Schenkel 44 ist auf die die Strahlaustrittsöffnung 54 aufweisende Stirnfläche 50 ausrichtbar. Hierzu ist die Abdeckung 36 um eine z. B. als Zapfen 45 ausgebildete Achse schwenkbar, der sich verschiebbar in dem Gehäuse 42 erstreckt. Somit ist das Gehäuse 42 zu dem Zapfen 45 in der Höhe, also relativ zu der Abdeckung 36 verstellbar (s. Pfeil 57).

Ferner verdeutlicht die Fig. 8, dass von einer Innenfläche einer der Schenkel 44, 48 ein vorzugsweise federndes Element 47 ausgeht, damit die Abdeckung 36 beim Verschließen der Strahlaustrittsöffnung 54 verrastet, z. B. in einer im Bereich der Strahlaustrittsöffnung 54 verlaufenden Vertiefung 55. Eine diesbezügliche konstruktive Möglichkeit gilt für sämtliche Ausführungsformen.

## Patentansprüche

1. Messgerät mit einem eine Strahlaustrittsöffnung (24, 54) aufweisenden Gehäuse (12, 42), insbesondere Lasergerät mit einer elektrooptischen Einrichtung zur Erzeugung eines waagerecht und/oder lotrecht verlaufenden Lichtstrahls, wobei das Gehäuse zumindest bereichsweise von einer Abdeckung (10, 36) umgeben ist, und wobei die Abdeckung (10, 36) um eine das Gehäuse durchsetzende Achse schwenkbar ist und einen ersten Abschnitt (28, 44) aufweist, der in Abhängigkeit von der Schwenkstellung der Abdeckung die Strahlaustrittsöffnung (24, 54) abdeckt oder freigibt,
**dadurch gekennzeichnet,**
**dass** das Gehäuse eine Quaderform aufweist,
wobei in Transportstellung des Messgerätes die Abdeckung an zumindest zwei aneinander grenzenden Außenflächen des Gehäuses flächig anliegt.

2. Messgerät nach Anspruch 1,
**dadurch gekennzeichnet,**
**dass** die Abdeckung (10) im Längsschnitt eine L-förmige Geometrie mit Längs- und Querschenkel (26, 28) aufweist und wobei der Querschenkel (28) der erste Abschnitt ist und dass insbesondere querschenkelfernliegender Endbereich des Längsschenkels (26) schwenkbar mit dem Gehäuse (12) verbunden ist.

3. Messgerät nach Anspruch 1 oder 2,
**dadurch gekennzeichnet,**
**dass** die Abdeckung (10) bei die Lichtaustrittsöffnung (24) verschließender Position eine Längsseitenfläche (14) und eine angrenzende Querseitenfläche (22) abdeckt und insbesondere fluchtend in angrenzende Außenflächen (16, 18, 20) des Gehäuses (12) übergeht.

4. Messgerät nach zumindest einem der vorhergehenden Ansprüche,
**dadurch gekennzeichnet,**
**dass** der Längs- und/oder Querschenkel (26, 28) der Abdeckung (10) abgewinkelte Längsränder (27, 29) aufweist, die bei die Strahlaustrittsöffnung (24) verschließender Position der Abdeckung (10) in einer zwischen der Längsseitenfläche (14) und der Kopf- bzw. Fußfläche (18, 20) des Gehäuses (12) verlaufenden Stufe (31) anliegen.

5. Messgerät nach zumindest Anspruch 1,
**dadurch gekennzeichnet,**
**dass** die Abdeckung (36) eine U-förmige Geometrie mit Quer- und Seitenschenkeln (44, 46, 48) aufweist, wobei die Seitenschenkel (46, 48) in ihren Endbereichen schwenkbar mit dem Gehäuse (42) verbunden sind und der Querschenkel der erste Abschnitt ist.

6. Messgerät nach zumindest Anspruch 5,
**dadurch gekennzeichnet,**
**dass** die Schwenkachse an der Abdeckung (36) mittig zwei gegenüberliegende Seitenflächen (38, 40), insbesondere Boden- und Kopffläche, des Gehäuses (42) durchsetzt und dass der Querschenkel (44) der Abdeckung auf gegenüberliegende senkrecht zu den Seitenflächen verlaufende Flächen (50, 52), insbesondere Stirnflächen des Gehäuses ausrichtbar ist.

7. Messgerät nach zumindest einem der vorhergehenden Ansprüche,
**dadurch gekennzeichnet,**
**dass** der Querschenkel (36) bzw. Längsschenkel (26) der Abdeckung (10, 36) zumindest ein Montagefixiermittel wie Durchbrechung (56, 58, 60, 62) aufweist, das vorzugsweise eine Wandhalterung ist.

8. Messgerät nach zumindest einem der vorhergehenden Ansprüche,
**dadurch gekennzeichnet,**
**dass** die Abdeckung (10, 36) bei die Strahlaustrittsöffnung (24, 54) verschließender Position mit dem Gehäuse (12, 42) verrastbar ist, wobei vorzugsweise von einer Innenfläche eines Seitenschenkels (44) ein insbesondere federndes Element (47) ausgeht, das bei die Strahlaustrittsöffnung (54) verschließender Stellung der Abdeckung (36) in eine Vertiefung (55) des Gehäuses (42) verrastend eingreift.

9. Messgerät nach zumindest einem der vorhergehenden Ansprüche,
**dadurch gekennzeichnet,**
**dass** bei die Strahlaustrittsöffnung (54) verschließender Position der Abdeckung (36) Außenränder der Quer- und Längsschenkel (44, 46, 48) fluchtend in angrenzende Seitenflächen (49) des Gehäuses (42) übergehen.

10. Messgerät nach zumindest einem der vorhergehenden Ansprüche,
**dadurch gekennzeichnet,**
**dass** in einer Querseitenfläche (22, 50) des Gehäuses (12, 42) die Strahlaustrittsöffnung (24, 54) verläuft.

11. Messgerät nach zumindest einem der vorhergehenden Ansprüche,
**dadurch gekennzeichnet,**
**dass** das Messgerät ein Lasergerät ist und dass die Achse quer, insbesondere senkrecht zum von der elektrooptischen Einrichtung erzeugten waagerecht verlaufenden Strahl verläuft.

12. Messgerät nach zumindest einem der vorhergehenden Ansprüche,
**dadurch gekennzeichnet,**
**dass** von der Abdeckung (10, 36) Lageraugen ausgehen, die in von dem Gehäuse (12, 42) ausgehende Lageraufnahmen eingreifen.

13. Messgerät nach zumindest einem der vorhergehenden Ansprüche,
**dadurch gekennzeichnet,**
**dass** bei die Lichtstrahlaustrittsöffnung (24, 54) abdeckender Position die Abdeckung (10, 36) mit ihren Schenkeln (26, 28, 44, 46, 48) entlang Außenflächen (14, 22, 38, 40, 50) des Gehäuses (12, 38) verlaufen und auf diesen zumindest abschnittsweise aufliegen, wobei insbesondere die Abdeckung (10, 36) im Wesentlichen ausschließlich aus Abschnitten besteht, die bei die Strahlaustrittsöffnung (24, 54) abdeckender Position entlang von Außenflächen (14, 22, 38, 40, 50) verlaufen und auf diesen zumindest bereichsweise aufliegen und/oder bei die Lichtstrahlaustrittsöffnung (24, 54) verschließender Position die Abdeckung (10, 36) fluchtend in die an die Abdeckung angrenzenden Bereiche des Gehäuses (12, 42) übergeht.

14. Messgerät nach zumindest einem der vorhergehenden Ansprüche,
**dadurch gekennzeichnet,**
**dass** der Längs- und/oder Querschenkel (26, 28) der Abdeckung (10) abgewinkelte Längsränder (27, 29) aufweist, die sich zumindest partiell entlang Kopf- und/oder Bodenwandung (18, 20) zum Verschließen von Strahlaustrittsöffnung erstrecken.

15. Messgerät nach zumindest einem der vorhergehenden Ansprüche,
**dadurch gekennzeichnet,**
**dass** in der Abdeckung (10, 36) zumindest ein Magnet eingesetzt ist und/oder im unteren Seitenschenkel (48) der Abdeckung (36) ein Anschlussgewinde vorgesehen ist.

16. Messgerät nach zumindest einem der vorhergehenden Ansprüche,
**dadurch gekennzeichnet,**
**dass** die Abdeckung (36) eine L-Geometrie mit entlang Bodenwandung verlaufendem ersten Schenkel (48) und entlang einer Stirnfläche (50) verlaufendem bzw. auf diese ausrichtbarem Schenkel (44) aufweist und dass die Achse der Abdeckung als Zapfenelement ausgebildet ist, über das das Gehäuse (42) zu der Abdeckung abstandsveränderbar ist.

## Claims

1. Measuring device with a housing (12, 42) which features a beam outlet opening (24, 54), particularly laser device with an electro-optical mechanism for generating a horizontal and/or vertical light beam, wherein the housing is at least partially surrounded by a cover (10, 36), and wherein the cover (10, 36) is pivotable about an axis that passes through the housing and has a first section (28, 44), which, depending on the pivot position of the cover, covers or exposes the beam outlet opening (24, 54),
**characterized in**
**that** the housing has a cuboid shape, with the cover abutting plane on at least two adjoining outer surfaces of the housing when the measuring device is in transport position.

2. Measuring device according to claim 1,
**characterized in**
**that** in longitudinal section the cover (10) has an L-shaped geometry with longitudinal leg and transverse leg (26, 28), with the transverse leg (28) constituting the first section, and that especially end section of the longitudinal leg (26) distant from the transverse leg is pivotably connected to the housing (12).

3. Measuring device according to claim 1 or 2,
**characterized in**
**that** the cover (10) in position closing the light outlet opening (24) covers a longitudinal side surface (14) and an adjoining transverse side surface (22) and especially merges flush with adjoining outer surfaces (16, 18, 20) of the housing (12).

4. Measuring device according to at least one of the preceding claims,
**characterized in**
**that** the longitudinal leg and/or transverse leg (26, 28) of the cover (10) has angled longitudinal edges (27, 29), which, when the cover (10) is in position covering the beam outlet opening (24), abut in a step (31) running between the longitudinal side surface (14) and the top surface, respectively bottom surface (18, 20) of the housing (12).

5. Measuring device according to at least claim 1,
**characterized in**
**that** the cover (36) has a U-shaped geometry with transverse legs and lateral legs (44, 46, 48), wherein the lateral legs (46, 48) in their end regions are pivotably connected to the housing (42) and the transverse leg is the first section.

6. Measuring device according to at least claim 5,
**characterized in**
**that** the pivotable axis at the cover (36) centrically penetrates two opposing lateral surfaces (38, 40), particularly bottom surface and top surface, of the housing (42), and that the transverse leg (44) of the cover is alignable with opposing surfaces (50, 52) running perpendicular to the lateral surfaces, in particular with facing surfaces of the housing.

7. Measuring device according to at least one of the preceding claims,
**characterized in**
**that** the transverse leg (36), respectively the longitudinal leg (26) of cover (10, 36) comprises at least one mounting fastener such as through-hole (56, 58, 60, 62), which preferably is a wall attachment.

8. Measuring device according to at least one of the preceding claims,
**characterized in**
**that** the cover (10, 36) in position closing the beam outlet opening (24, 54) is engageable with the housing (12, 42), wherein preferably from an inner surface of the lateral leg (44) originates an especially resilient element (47), which snap-locks with a recess (55) of the housing (42) when the cover (36) is in a position closing the beam outlet window (54).

9. Measuring device according to at least one of the preceding claims,
**characterized in**
**that** with the cover (36) in position closing the beam outlet opening (54), outer edges of the transverse legs and longitudinal legs (44, 46, 48) merge flush in adjoining lateral surfaces (49) of the housing (42).

10. Measuring device according to at least one of the preceding claims,
**characterized in**
**that** the beam outlet opening (24, 54) runs in a transverse lateral surface (22, 50) of the housing (12, 42).

11. Measuring device according to at least one of the preceding claims,
**characterized in**
**that** the measuring device is a laser device and that the axis runs transversely, especially perpendicular to the horizontal beam generated by the electro-optical mechanism.

12. Measuring device according to at least one of the preceding claims,
**characterized in**
**that** bearing eyes origin from the cover (10, 36), which engage into bearing supports originating from the housing.

13. Measuring device according to at least one of the preceding claims,
**characterized in**
**that** in position closing the light beam outlet opening (24, 54) the cover (10, 36) runs with its legs (26, 28, 44, 46, 48) along outer surfaces (14, 22, 38, 40, 50) of the housing (12, 38) and abut on these at least in sections, wherein especially the cover (10, 36) consists especially exclusively of sections which, in position covering the beam outlet opening (24, 54), run along outer surfaces (14, 22, 38, 40, 50) and abut on them at least in sections and/or in position covering the light beam outlet opening (24, 54) the cover (10, 36) merges flush into the regions of the housing (12, 42) which adjoin the cover.

14. Measuring device according to at least one of the preceding claims,
**characterized in**
**that** the longitudinal legs and/or transverse legs (26, 28) of the cover (10) comprise angled longitudinal edges (27, 29), which extend at least partially along top wall and/or bottom wall (18, 20) for closing beam outlet opening.

15. Measuring device according to at least one of the preceding claims,
**characterized in**
**that** in the cover (10, 36) is inserted at least one magnet and/or in the lower lateral leg (48) of the cover (36) is provided a connection thread.

16. Measuring device according to at least one of the preceding claims,
**characterized in**
**that** the cover (36) has an L-shaped geometry with a first leg (48) that runs along bottom wall and a leg (44) that runs along or is aligned with a front surface (50), and that the axis of the cover is formed as a bolt element, via which the distance of the housing (42) to the cover is adjustable.

## Revendications

1. Instrument de mesure avec un boîtier (12, 42) présentant un orifice de sortie de rayon (24, 54), en particulier instrument à laser avec un dispositif électrooptique destiné à générer un rayon lumineux horizontal et/ou vertical, sachant que le boîtier est entouré au moins partiellement par un cache (10, 36), et que le cache (10, 36) peut pivoter autour d'un axe traversant le boîtier et présente une première partie (28, 44) qui, en fonction de la position de pivotement du cache, recouvre ou dégage l'orifice de sortie de rayon (24, 54),
**caractérisé en ce**
**que** le boîtier présente une forme parallélépipédique, sachant que dans la position de transport de l'instrument de mesure, le cache s'étend surfaciquement contre au moins deux faces extérieures voisines du boîtier.

2. Instrument de mesure selon la revendication 1,
**caractérisé en ce**
**qu'**en coupe longitudinale, le cache (10) présente une géométrie en forme de L avec une branche longitudinale et une branche transversale (26, 28), sachant que la branche transversale (28) est la première partie et qu'en particulier l'extrémité de la branche longitudinale (26) opposée à la branche transversale est reliée au boîtier (12) de manière pivotante.

3. Instrument de mesure selon la revendication 1 ou 2,
**caractérisé en ce**
**que** dans la position obturant l'orifice de sortie de lumière (24), le cache (10) recouvre une face latérale longitudinale (14) et une face latérale transversale adjacente (22), et s'aligne, en particulier sans déport, sur des faces extérieures (16, 18, 20) voisines du boîtier (12).

4. Instrument de mesure selon au moins une des revendications précédentes,
**caractérisé en ce**
**que** la branche longitudinale et/ou la branche transversale (26, 28) du cache (10) présente(nt) des bords longitudinaux coudés (27, 29) qui, dans la position du cache (10) obturant l'orifice de sortie de rayon (24), s'engagent dans un palier (31) s'étendant entre la face latérale longitudinale (14) et la face inférieure et/ou supérieure (18, 20) du boîtier (12).

5. Instrument de mesure selon au moins la revendication 1,
**caractérisé en ce**
**que** le cache (36) présente une géométrie en forme de U avec branches transversale et latérales (44, 46, 48), sachant que les extrémités des branches latérales (46, 48) sont reliées au boîtier (42) de manière pivotante, et que la branche transversale est la première partie.

6. Instrument de mesure selon au moins la revendication 5,
**caractérisé en ce**
**que** l'axe de pivotement sur le cache (36) traverse en leurs centres deux faces latérales opposées (38, 40), en particulier la face inférieure et la face supérieure, du boîtier (42), et que la branche transversale (44) du cache peut être aligné sur des faces (50, 52) opposées s'étendant perpendiculairement aux faces latérales, en particulier sur les faces frontales du boîtier.

7. Instrument de mesure selon au moins une des revendications précédentes,
**caractérisé en ce**
**que** la branche transversale (36) ou la branche longitudinale (26) du cache (10, 36) présente au moins un moyen de fixation tel qu'une ouverture (56, 58, 60, 62), qui est de préférence une fixation murale.

8. Instrument de mesure selon au moins une des revendications précédentes,
**caractérisé en ce**
**que** dans la position obturant l'orifice de sortie de rayon (24, 54), le cache (10, 36) peut être enclenché avec le boîtier (12, 42), sachant que de préférence d'une face intérieure d'une branche latérale (44) part un élément (47), en particulier élastique, qui s'enclenche dans un évidement (55) du boîtier (42) lorsque le cache (36) est dans la position obturant l'orifice de sortie de rayon (54).

9. Instrument de mesure selon au moins une des revendications précédentes,
**caractérisé en ce**
**que** dans la position du cache (36) obturant l'orifice de sortie de rayon (54), des bords extérieurs des branches transversale et longitudinales (44, 46, 48) s'alignent sans déport sur des faces latérales voisines (49) du boîtier (42).

10. Instrument de mesure selon au moins une des revendications précédentes,
**caractérisé en ce**
**que** l'orifice de sortie de rayon (24, 54) s'étend dans une face latérale transversale (22, 50) du boîtier (12, 42).

11. Instrument de mesure selon au moins une des revendications précédentes,
**caractérisé en ce**
**que** l'instrument de mesure est un instrument à laser et que l'axe s'étend transversalement, en particulier verticalement par rapport au rayon horizontal généré par le dispositif électrooptique.

12. Instrument de mesure selon au moins une des revendications précédentes,
**caractérisé en ce**
**que** du cache (10, 36) partent des bossages qui s'engagent dans des logements partant du boîtier (12, 42).

13. Instrument de mesure selon au moins une des revendications précédentes,
**caractérisé en ce**
**que** dans la position obturant l'orifice de sortie de rayon lumineux (24, 54), le cache (10, 36) avec ses branches (26, 28, 44, 46, 48) s'étendent le long de faces extérieures (14, 22, 38, 40, 50) du boîtier (12, 38) et reposent au moins partiellement sur celui-ci, sachant qu'en particulier le cache (10, 36) est pour l'essentiel exclusivement constitué de parties qui, dans la position obturant l'orifice de sortie de rayon (24, 54), s'étendent le long de faces extérieures (14, 22, 38, 40, 50) et reposent au moins partiellement sur celles-ci et/ou que dans la position obturant l'orifice de sortie de rayon lumineux (24, 54), le cache (10, 36) s'aligne sans déport sur des zones du boîtier (12, 42) adjacentes au cache.

14. Instrument de mesure selon au moins une des revendications précédentes,
**caractérisé en ce**
**que** la branche longitudinale et/ou la branche transversale (26, 28) du cache (10) présente(nt) des bords longitudinaux coudés (27, 29), qui s'étendent au moins partiellement le long de la paroi supérieure et/ou inférieure (18, 20) pour obturer l'orifice de sortie de rayon.

15. Instrument de mesure selon au moins une des revendications précédentes,
**caractérisé en ce**
**qu'**au moins un aimant est placé dans le cache (10, 36) et/ou qu'est prévu un raccord fileté dans la branche latérale inférieure (48) du cache (36).

16. Instrument de mesure selon au moins une des revendications précédentes,
**caractérisé en ce**
**que** le cache (36) présente une géométrie en forme de L avec une première branche (48) s'étendant le long de la paroi inférieure et une branche (44) s'étendant le long d'une face frontale (50) ou pouvant être alignée sur celle-ci, et que l'axe du cache est conçu en tant qu'élément-pivot au moyen duquel la distance entre le boîtier (42) et le cache peut être modifiée.
